(19) Europäisches Patentamt / European Patent Office / Office européen des brevets

(11) **EP 3 995 834 B1**

(12) **FASCICULE DE BREVET EUROPEEN**

(45) Date de publication et mention de la délivrance du brevet:
**23.08.2023   Bulletin 2023/34**

(21) Numéro de dépôt: **21204068.7**

(22) Date de dépôt: **21.10.2021**

(51) Classification Internationale des Brevets (IPC):
**G01P 5/00** *(2006.01)*      **G01P 21/02** *(2006.01)*
**F03D 17/00** *(2016.01)*      **G01P 5/06** *(2006.01)*
**F03D 7/04** *(2006.01)*       *F03D 7/02* *(2006.01)*
*G01P 5/26* *(2006.01)*        *G01P 5/08* *(2006.01)*

(52) Classification Coopérative des Brevets (CPC):
**G01P 21/025; F03D 17/00; G01P 5/00; G01P 5/06;**
F05B 2260/821; F05B 2260/84; F05B 2270/32;
F05B 2270/328; F05B 2270/335; G01P 5/08;
G01P 5/26; G01S 17/58; G01S 17/95; Y02E 10/72

(54) **PROCEDE DE DETERMINATION DE LA VITESSE DU VENT DANS LE PLAN DU ROTOR D'UNE EOLIENNE**

VERFAHREN ZUR BESTIMMUNG DER WINDGESCHWINDIGKEIT IN DER ROTOREBENE EINER WINDKRAFTANLAGE

METHOD FOR DETERMINING THE WIND SPEED IN THE ROTOR PLANE OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.11.2020   FR 2011395**

(43) Date de publication de la demande:
**11.05.2022   Bulletin 2022/19**

(73) Titulaire: **IFP Energies nouvelles**
**92852 Rueil-Malmaison (FR)**

(72) Inventeurs:
• **BEZERRA RUFINO FERREIRA PAIVA, Eduardo**
**92852 RUEIL-MALMAISON CEDEX (FR)**
• **NGUYEN, Hoai-Nam**
**92852 RUEIL-MALMAISON CEDEX (FR)**
• **LEPREUX, Olivier**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
WO-A1-2017/211367      FR-A1- 2 996 266
US-A1- 2012 078 518      US-A1- 2015 097 373

• YU JIE ET AL: "A Gaussian mixture copula model based localized Gaussian process regression approach for long-term wind speed prediction", ENERGY, ELSEVIER, AMSTERDAM, NL, vol. 61, 3 octobre 2013 (2013-10-03), pages 673-686, XP028743548, ISSN: 0360-5442, DOI: 10.1016/J.ENERGY.2013.09.013

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât peut abriter généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de l'éolienne. La nacelle peut tourner pour orienter le rotor dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique), ou tout autre type de machine de conversion, qui convertit l'énergie recueillie en énergie électrique ou tout type d'énergie. Le rotor est potentiellement doté de systèmes de contrôle tels que des pales à angle variable ou des freins aérodynamiques ;

- éventuellement une transmission, composée de deux axes (arbre mécanique du rotor et arbre mécanique de la machine de conversion) reliés par une transmission (boite de vitesse) formant ainsi une chaîne cinématique entre l'arbre mécanique du rotor et l'arbre mécanique de la machine de conversion.

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 12 m/s. Il n'est pas nécessaire de concevoir des éoliennes qui maximisent leur rendement à des vitesses de vent plus élevées, celles-ci étant peu fréquentes. En cas de vitesses de vent supérieures à 12 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des éoliennes à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LiDAR (acronyme de l'expression en langue anglaise « light détection and ranging » pouvant être traduite par télédétection par Laser). Le LiDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LiDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LiDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elles puissent fournir une puissance maximale (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaître la ressource productrice d'énergie. Ceci est important pour les projets éoliens, puisque cela conditionne la fiabilité financière du projet. Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LiDAR en estimant précisément la vitesse du vent au niveau du rotor, c'est-à-dire dans le plan du rotor. Une telle application est décrite notamment dans la demande de brevet FR 3013777 (US 2015145253).

Toutefois, le capteur LiDAR est un capteur onéreux. De plus, le développement d'un tel capteur LiDAR étant relativement récent, il est encore difficile de savoir, en transformant les mesures brutes du capteur LiDAR, comment exploiter les caractéristiques du champ de vent telles que la vitesse du vent, la direction du vent, le cisaillement du vent, la turbulence, le facteur d'induction, etc. Un tel capteur LiDAR nécessite donc une mise en oeuvre complexe pour déterminer la vitesse du vent dans le plan du rotor. C'est pourquoi, il existe un besoin de déterminer la vitesse du vent dans le plan du rotor de manière peu onéreuse, de manière fiable, et directement exploitable, par exemple pour le contrôle et/ou le diagnostic de l'éolienne.

Les documents WO2017/211367, US2012/078518, US2015/097373 et FR2996266 font aussi partie de l'état de l'art.

## Résumé de l'invention

La présente invention a pour but de déterminer en temps réel, de manière peu onéreuse, sans instrumentation spécifique, et de manière fiable, la vitesse de vent dans le plan du rotor. Dans ce but, la présente invention concerne un procédé de détermination de la vitesse du vent dans le plan d'un rotor d'une éolienne, au moyen de mesures de la vitesse de rotation du rotor, de l'angle des pales et de la puissance générée. Le procédé selon l'invention met en oeuvre un modèle de l'éolienne qui est construit à partir de mesures de la vitesse du vent, et au moyen de regroupement des mesures, et de régressions. Ainsi, une fois le modèle d'éolienne construit, on peut appliquer, en temps réel, de manière fiable, et sans instrumentation spécifique, ce modèle pour déterminer la vitesse du vent dans le plan du rotor à partir de mesures de la vitesse de rotation du rotor, de l'angle des pales et de la puissance électrique générée.

L'invention concerne un procédé de détermination d'une vitesse du vent dans le plan d'un rotor d'une éolienne, dans lequel on met en oeuvre les étapes suivantes :

a. On construit un modèle d'éolienne qui relie la vitesse de rotation dudit rotor de ladite éolienne, l'angle de l'inclinaison des pales de ladite éolienne, et la puissance générée par une machine de conversion de l'éolienne à la vitesse du vent dans le plan du rotor de ladite éolienne au moyen des étapes suivantes :

i. On mesure simultanément la vitesse du vent dans le plan du rotor de ladite éolienne ainsi que la vitesse de rotation dudit rotor, l'angle d'inclinaison des pales et la puissance générée par ladite machine de conversion de ladite éolienne ;

ii. On classe lesdites mesures simultanées de la vitesse du vent dans le plan du rotor de ladite éolienne ainsi que de la vitesse de rotation dudit rotor, de l'angle d'inclinaison des pales et de la puissance générée par ladite machine de conversion de ladite éolienne en au moins deux classes de conditions de fonctionnement de l'éolienne ;

iii. Pour chaque classe, on détermine une régression entre les mesures de la vitesse du vent dans le plan du rotor de ladite éolienne ainsi que la vitesse de rotation dudit rotor, l'angle d'inclinaison des pales et la puissance générée par ladite machine de conversion de ladite éolienne par une méthode de décomposition en fonctions de base, et par une méthode permettant d'établir une relation entre ces fonctions de base et la vitesse du vent dans le plan du rotor, de préférence au moyen d'une méthode de régression par processus gaussien et par une méthode de régression par les moindres carrés ;

iv. On construit ledit modèle de ladite éolienne au moyen desdites régressions déterminées pour chaque classe ;

b. On mesure, en temps réel, la vitesse de rotation dudit rotor, l'angle d'inclinaison des pales et la puissance générée par ladite machine de conversion de ladite éolienne ; et

c. On détermine, en temps réel, la vitesse du vent dans le plan dudit rotor de ladite éolienne au moyen desdites mesures en temps réel de la vitesse de rotation dudit rotor, de l'angle d'inclinaison des pales et de la puissance générée par ladite machine de conversion de ladite éolienne et dudit modèle d'éolienne.

Selon un mode de réalisation, on classe lesdites mesures de la vitesse du vent, de la vitesse de rotation dudit rotor, de l'angle d'inclinaison des pales et de la puissance générée par ladite machine de conversion de ladite éolienne en au moins deux classes de conditions de fonctionnement de l'éolienne au moyen d'une méthode de classification, notamment au moyen d'un algorithme du k-means, de préférence au moyen d'un algorithme du k-means ++.

Avantageusement, le nombre de classes est compris entre 3 et 10, de préférence entre 4 et 7.

Conformément à une mise en oeuvre, on mesure la vitesse du vent dans le plan du rotor sur la base de mesures d'un capteur LiDAR.

Selon un aspect, on détermine, en temps réel, la vitesse de vent dans le plan dudit rotor de ladite éolienne en déterminant la distance euclidienne entre lesdites mesures en temps réel de la vitesse de rotation dudit rotor, de l'angle d'inclinaison des pales et de la puissance générée par ladite machine de conversion de ladite éolienne et le centre de chaque classe, et on applique ledit modèle de l'éolienne par une combinaison pondérée desdites régressions de chaque classe, la pondération étant dépendante de ladite distance euclidienne.

Selon une option de réalisation, on prédit la vitesse du vent dans le plan dudit rotor de ladite éolienne pour au moins un pas de temps futur, à partir dudit modèle d'éolienne et desdites mesures en temps réel de la vitesse de rotation dudit rotor, de l'angle d'inclinaison des pales et de la puissance générée par ladite machine de conversion de ladite éolienne.

L'invention concerne en outre une procédé de contrôle d'une éolienne. Pour ce procédé, on met en oeuvre les étapes suivantes :

   a. on détermine ladite vitesse du vent dans ledit plan de rotor de l'éolienne au moyen du procédé selon l'une des caractéristiques précédentes ;
   b. on contrôle ladite éolienne en fonction de ladite vitesse du vent dans ledit plan du rotor de ladite éolienne.

De plus, l'invention concerne un produit programme d'ordinateur qui comprend des instructions de code agencées pour mettre en oeuvre les étapes d'un procédé selon l'une des caractéristiques précédentes, lorsque le programme est exécuté sur une unité de contrôle et/ou de diagnostic de ladite éolienne.

En outre, l'invention concerne une éolienne qui comporte des moyens de mesure de la vitesse de rotation dudit rotor, des moyens de mesure de l'angle d'inclinaison des pales de l'éolienne, des moyens de mesure de la puissance générée par la machine de conversion de ladite éolienne, et des moyens de détermination de la vitesse du vent dans le plan du rotor de l'éolienne aptes à mettre en oeuvre le procédé selon l'une des caractéristiques précédentes.

Selon un mode de réalisation, l'éolienne comporte un système de contrôle et d'acquisition de données en temps réel qui comprend lesdits moyens de mesure de la vitesse de rotation dudit rotor, lesdits moyens de mesure de l'angle d'inclinaison des pales de l'éolienne, et lesdits moyens de mesure de la puissance générée par la machine de conversion de ladite éolienne.

D'autres caractéristiques et avantages du procédé et du système selon l'invention, apparaîtront à la lecture de la description ci-après d'exemples non limitatifs de réalisations, en se référant aux figures annexées et décrites ci-après.

**Liste des figures**

La figure 1 illustre une éolienne selon un mode de réalisation de l'invention.

La figure 2 illustre les étapes du procédé selon un mode de réalisation de l'invention.

La figure 3 illustre des courbes de la vitesse effective du vent dans le plan du rotor, parmi lesquelles une courbe de référence, et trois courbes obtenues par le procédé selon trois modes de réalisation l'invention pour un exemple d'application.

**Description des modes de réalisation**

La présente invention concerne un procédé de détermination en temps réel de la vitesse du vent dans le plan du rotor d'une éolienne, par exemple la vitesse de vent effective dans le plan du rotor d'une éolienne.

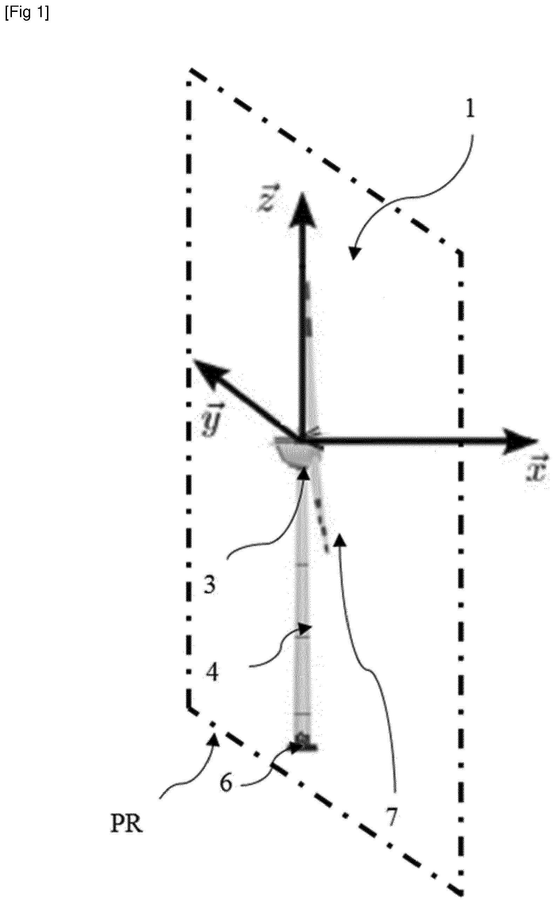

La figure 1 représente, de manière schématique et non limitative, une éolienne 1 à axe horizontal pour le procédé selon un mode de réalisation de l'invention. Classiquement, une éolienne 1 permet de transformer l'énergie cinétique du vent en énergie électrique ou mécanique. Pour la conversion du vent, elle se compose des éléments suivants :

- un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 peut abriter généralement une partie des composants électriques et électroniques (modulateur, commande, multiplicateur, générateur, ...) ;
- une nacelle 3 montée au sommet du mât 4, abritant des composants mécaniques, pneumatiques, certains composants électriques et électroniques (non représentés), nécessaires au fonctionnement de la machine de conversion. La nacelle 3 peut tourner pour orienter le rotor dans la bonne direction ;
- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) ou toute autre machine de conversion (par exemple machine hydraulique ou pneumatique) qui convertit l'énergie recueillie en énergie électrique ou toute autre énergie (par exemple hydraulique ou pneumatique). Le rotor est potentiellement doté de systèmes de contrôle tels que des pales à angle variable ou des freins aérodynamiques ;
- éventuellement une transmission (non représentée), composée de deux axes (arbre mécanique du rotor et arbre mécanique de la machine de conversion) reliés, formant ainsi une chaîne cinématique entre l'arbre mécanique du rotor et l'arbre mécanique de la machine de conversion.

Sur cette figure, sont représentés également les axes x, y et z. Le point de référence de ce repère est le centre du rotor. La direction x est la direction longitudinale, correspondant à la direction de l'axe du rotor, en amont de l'éolienne. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. Le plan du rotor est indiqué par le rectangle en traits pointillés PR, il est défini par les directions y, z pour une valeur de x nulle.

Selon l'invention, le procédé de détermination de la vitesse du vent comporte les étapes suivantes :

1/ Construction d'un modèle d'éolienne

2/ Mesures

3/ Détermination de la vitesse du vent

Les étapes 2 et 3 sont réalisées en temps réel, alors que l'étape 1 de construction du modèle d'éolienne est réalisée préalablement, une seule fois. Ces étapes peuvent être mises en oeuvre automatiquement par des moyens informatiques, notamment par un contrôleur d'une éolienne, qui comportent à minima une mémoire et des moyens de calcul. Ces étapes sont détaillées dans la suite de la description.

La première étape de construction du modèle d'éolienne est mise en oeuvre au moyen de sous-étapes, de telle sorte que le procédé de détermination de la vitesse du vent comporte les étapes suivantes :

1/ Construction d'un modèle d'éolienne

a/ Mesures simultanées

b/ Classement par groupement

c/ Régressions

d/ Construction du modèle d'éolienne

2/ Mesures

3/ Détermination de la vitesse du vent

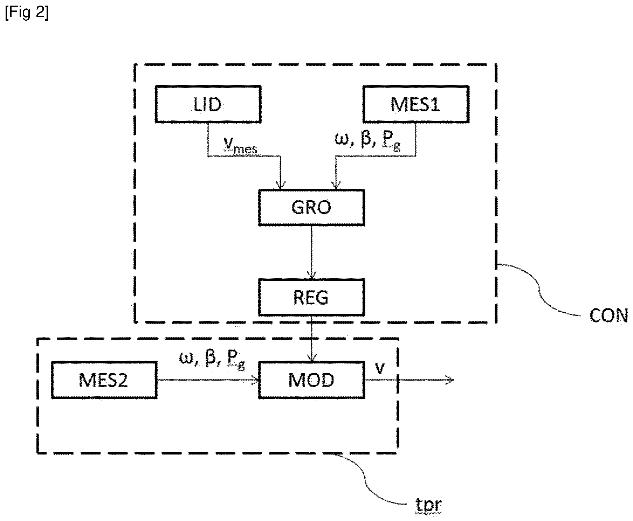

La figure 2 illustre, schématiquement et de manière non limitative, les étapes du procédé selon un mode de réalisation de l'invention. Dans un premier temps, on construit CON un modèle de l'éolienne MOD. Pour cela, on acquiert des mesures simultanées LID et MES1 respectivement de la vitesse du vent $v_{mes}$ et de la vitesse de rotation du rotor ω, de l'angle d'inclinaison des pales β et de la puissance générée $P_g$ par la machine de conversion de l'éolienne. A partir de ces mesures simultanées, on classe lesdites mesures en groupement GRO. Pour chaque groupement, on détermine une régression REG entre les mesures pour construire le modèle d'éolienne MOD. Ensuite, en temps réel tpr, en utilisation de l'éolienne, on acquiert des mesures MES2 uniquement de la vitesse de rotation du rotor ω, de l'angle d'inclinaison des pales β et de la puissance générée $P_g$ par la machine de conversion de l'éolienne. On applique le modèle construit MOD à ces mesures pour déterminer, en temps réel, la vitesse v du vent dans le plan du rotor.

Selon un mode de réalisation, la présente invention peut être mise en oeuvre pour une détermination de la vitesse actuelle du vent (on peut parler alors de filtrage).

En variante, la présente invention peut être mise en oeuvre pour une prédiction de la vitesse du vent pour au moins un pas de temps futur (on peut parler alors de prédiction).

## 11 Construction d'un modèle d'éolienne

Lors de cette étape, on construit un modèle d'éolienne. Un modèle d'éolienne est un modèle qui relie la vitesse de rotation du rotor, l'angle d'inclinaison des pales de l'éolienne, la puissance générée par une machine de conversion de l'éolienne à la vitesse de vent dans le plan du rotor de l'éolienne. Selon l'invention, on met en oeuvre cette étape une unique fois, préalablement lors d'une campagne d'entraînement du modèle. Puis, en temps réel, en utilisation de l'éolienne, on conserve le modèle d'éolienne construit, et on met en oeuvre uniquement les étapes 2 et 3. Ce modèle d'éolienne peut être vu comme une cartographie (de l'anglais « map ») de l'éolienne.

Pour cette étape, on met en oeuvre les sous-étapes suivantes :

## a/ Mesures simultanées

Lors de cette sous-étape, on mesure simultanément la vitesse du vent dans le plan du rotor ainsi que la vitesse de rotation du rotor, l'angle d'inclinaison des pales de l'éolienne, la puissance générée par une machine de conversion de l'éolienne (en d'autres termes la puissance générée par l'éolienne). Toutes ces mesures permettent d'entraîner le modèle d'éolienne. On peut noter qu'on mesure la vitesse du vent uniquement dans cette étape de construction, en effet, cette mesure n'est pas mise en oeuvre en temps réel. Ainsi, en temps réel, le procédé selon l'invention ne nécessite pas d'instrumentation spécifique. Cette mesure de la vitesse du vent permet de construire un modèle d'éolienne représentatif, c'est-à-dire qui permet de remplacer le capteur de vitesse du vent.

Selon un mode de réalisation de l'invention, on peut mesurer la vitesse du vent dans le plan du rotor au moyen d'un capteur placé sur l'éolienne, par exemple un capteur LiDAR. Pour ce mode de réalisation de l'invention, on peut mettre en oeuvre une méthode de reconstruction de la vitesse de vent, telle que décrite notamment dans les demandes de brevet FR3068139 (US 2020/0124026), FR3088971 (US 2020/0166650).

Alternativement, on peut mesurer la vitesse du vent dans le plan du rotor par tout autre moyen, par exemple au moyen d'un anémomètre ou tout capteur équivalent.

Conformément à une mise en oeuvre de l'invention, on peut mesurer la vitesse de rotation du rotor, l'angle d'inclinaison des pales de l'éolienne, la puissance générée par une machine de conversion de l'éolienne obtenue à partir d'un système de contrôle et d'acquisition de données en temps réel (SCADA). Un système de contrôle et d'acquisition de données en temps réel (SCADA) (de l'anglais : « Supervisory Control And Data Acquisition ») est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). De préférence, toutes les mesures peuvent être obtenues à partir du système SCADA, ce qui facilite la mise en oeuvre du procédé sans instrumentation particulière. En outre, le système SCADA peut permettre de prendre en compte au moins une autre mesure pour rendre la détermination de la vitesse du vent dans le plan du rotor plus précise. Il peut s'agir notamment de températures, de données électriques, de vibrations, etc. Les températures peuvent informer sur les pertes mécaniques effectives, et permettent ainsi d'affiner la modélisation de l'éolienne. L'accélérométrie, associée à une compréhension modale et vibratoire suffisamment fine et fidèle de la structure, peut permettre de remonter à une estimation de l'état du vent et des turbulences impactant l'éolienne.

Alternativement, au moins une des mesures peut être obtenue par un capteur dédié. Pour cette réalisation :

- pour la mesure de la vitesse de rotation du rotor, on peut utiliser un capteur de rotation angulaire du rotor, et/ou
- pour la mesure de l'angle d'inclinaison des pales, on peut utiliser un capteur angulaire des pales, et/ou
- pour la mesure de la puissance générée par la machine de conversion, on peut utiliser un capteur de tension connue et contrôlée, et un capteur d'intensité pour la mesure du courant débité par la génératrice.

Lors de cette étape, on peut également mémoriser les mesures, notamment pour la mise en oeuvre dans laquelle on utilise les mesures antérieures (décrite ci-après dans la sous-étape c).

b/ Classement par groupement

Lors de cette sous-étape, on classe toutes les mesures de la sous-étape 1/a (vitesse du vent dans le plan du rotor et vitesse de rotation du rotor, puissance générée et angle d'inclinaison des pales) en au moins deux classes, appelés aussi groupements (en anglais « clusters ») de conditions de fonctionnement de l'éolienne. On peut parler de sous-étape de « classification » ou de « partitionnement des données ». En d'autres termes, on classe l'ensemble des mesures, en plusieurs groupements, chaque groupement réunissant des mesures du capteur de vitesse de vent, et les mesures issues de l'éolienne (vitesse du rotor, angle d'inclinaison des pales, puissance générée) qui correspondent à des conditions de fonctionnement de l'éolienne similaires.

Selon un mode de réalisation de l'invention, on peut classer automatiquement les mesures des deux types au moyen d'un algorithme du k-means, de préférence un algortihme de k-means ++. Un tel algorithme est décrit notamment dans le document : « D. Arthur and S. Vassilvitskii, "k-means++: The Advantages of Careful Seeding," Stanford InfoLab, Technical Report 2006-13, June 2006. [Online]. Available: http://ilpubs.stanford.edu:8090/778/ ».

Alternativement, tout autre algorithme automatique de classement peut être utilisé, par exemple un algorithme de "clustering" hiérarchique, ou un algorithme DBSCAN (de l'anglais : « density-based spatial clustering of applications with noise» pouvant être traduit par classement spatial basé sur la densité d'applications bruitées), etc.

Conformément à une mise en oeuvre de l'invention, le nombre de groupements peut être compris entre 3 et 10, de préférence entre 4 et 7, et peut valoir par exemple 5. Ces gammes de valeur permettent de bien différencier les conditions de fonctionnement de l'éolienne, tout en limitant la complexité de la construction du modèle d'éolienne, qui pourrait résulter d'un grand nombre de groupements.

c/ Régressions

Lors de cette sous- étape, pour chaque groupement déterminé à la sous-étape précédente, on détermine une régression entre les mesures simultanées de la sous-étape a (vitesse du vent dans le plan du rotor, vitesse de rotation du rotor, angle d'inclinaison des pales, et puissance générée) par une méthode de décomposition en fonctions de base et par une méthode permettant d'établir une relation entre ces fonctions de base et la vitesse du vent dans le plan du rotor. Avantageusement, on peut mettre en oeuvre une méthode de régression par processus gaussien et une méthode de régression par les moindres carrés. Ces méthodes de régression permettent de relier les mesures liées à l'éolienne (vitesse de rotation du rotor, angle d'inclinaison des pales, puissance générées) à la vitesse du vent. La méthode de régression par processus gaussien est une régression non paramétrique qui permet de sélectionner des fonctions de base pour la décomposition. Une telle régression de processus gaussien est flexible, et sans problème de sur-apprentissage (variables trop nombreuses et modèle trop complexe). La méthode de régression par les moindres carrées est une régression paramétrique simple à mettre en oeuvre, qui permet d'établir une relation entre les fonctions de base et la vitesse du vent dans le plan du rotor. Alternativement, on peut mettre en oeuvre tout autre méthode de régression permettant d'établir une relation entre ces fonctions de base et la vitesse du vent dans le plan du rotor.

De préférence, la régression peut prendre en compte les mesures antérieures, de préférence, la régression peut prendre en compte un nombre de pas de temps antérieurs afin de favoriser la précision de la détermination de la vitesse du vent. Pour cela, on peut relier, un nombre r de dernières mesures de la vitesse de rotation du rotor, de l'angle d'inclinaison des pales, et la puissance générée par la machine de conversion à la vitesse du vent dans le plan du rotor. Par exemple, si on considère qu'on prend un historique de r = 30 pas de temps antérieurs, on aura 90 mesures (entrées) reliées à la vitesse du vent dans le plan du rotor au pas de temps courant, ou pour au moins un pas de temps futur.

On décrit ci-dessous un exemple de réalisation non limitatif de cette sous-étape :

On note $\omega_t$ la vitesse angulaire du rotor au temps t, $p_t$ la puissance générée au temps t, $\beta_t$ l'angle d'inclinaison des pales au temps t, $v_t$ la vitesse du vent au temps t. Le but est de déterminer y, étant donné $x_{t-h}$, en posant $y_t = v_t$ et

$$x_{t-h} = \begin{bmatrix} \omega_{t-r:t-h} \\ \beta_{t-r:t-h} \\ p_{t-r:t-h} \end{bmatrix}$$

Avec r et h des entiers choisis de telle sorte que r > $h \geq 0$, et on note

$$\omega_{t-r:t-h} = \left[\omega_{t-r}, \ldots, \omega_{t-h-1}, \omega_{t-h}\right]^T$$

Ainsi, on se sert des mesures collectées entre t-r et t-h pour estimer la vitesse du vent au temps t. Les mêmes notations sont utilisées pour l'angle d'inclinaison des pales et pour la puissance générée. Si on utilise un filtrage (une détermination de la vitesse du vent actuel), on définit h = 0, alors que si on met en oeuvre une prédiction de la vitesse du vent, on définit h>0, par exemple h = 1 ou h = 2.

Dans chaque groupement, on applique une méthode de régression par processus gaussien GPR (de l'anglais « Gaussian Process Regression »), pour cela, on définit un noyau (de l'anglais « kernel ») k qui codifie les informations a priori sur la fonction latente qui relie les entrées à la sortie :

$$k(x_{a-h}, x_{b-h}) = k_{\omega}(\omega_{a-r:a-h}, \omega_{b-r:b-h})$$
$$+ k_{\beta}(\beta_{a-r:a-h}, \beta_{b-r:b-h})$$
$$+ k_p(p_{a-r:a-h}, p_{b-r:b-h}),$$

Avec

$$k_{\omega}(\cdot, \cdot') = (\cdot)^T L_1^{-1}(\cdot')$$
$$+ \sigma_1^2 \exp\left(-\frac{1}{2}((\cdot) - (\cdot'))^T L_2^{-1}((\cdot) - (\cdot'))\right),$$

$$k_{\beta}(\cdot, \cdot') = \sigma_2^2 \exp\left(-\frac{1}{2}((\cdot) - (\cdot'))^T L_3^{-1}((\cdot) - (\cdot'))\right),$$

$$k_p(\cdot, \cdot') = (\cdot)^T L_4^{-1}(\cdot')$$
$$+ \sigma_3^2 \exp\left(-\frac{1}{2}((\cdot) - (\cdot'))^T L_5^{-1}((\cdot) - (\cdot'))\right),$$

$$L_i = \text{diag}\{((k - h + 1)l_i)^2, \ldots, (2l_i)^2, l_i^2\}.$$

a et b sont des valeurs de temps t, identiques ou différentes. Dans ces formules, le point et l'apostrophe correspondent au même argument pour les k. Par exemple pour $k_p$ le point correspond à $p_{a-r:a-h}$ et l'apostrophe correspond à $p_{b-r:b-h}$. Ainsi, les hyper-paramètres (bruit et variance) du noyau dans l'équation ci-dessus sont $l_1$, ..., $l_5$, $\sigma_1$, $\sigma_2$, et $\sigma_3$. Les idées derrière ce noyau sont :

1) les contributions linéaires (c'est-à-dire celles de la forme $(\cdot)^T L_i(\cdot)$) tiennent compte du fait qu'on s'attend à ce que la vitesse du vent soit plus élevée lorsque l'éolienne produit plus d'énergie et lorsque que la vitesse du rotor est plus rapide ;

2) les contributions non linéaires tiennent compte de la dynamique plus complexe de la turbine ;

3) les matrices Li sont telles que présentées dans les équations ci-dessus afin d'obtenir des poids plus faibles pour les composants d'entrée contenant des informations plus détaillées dans le passé tout en conservant un petit nombre d'hyper-paramètres à sélectionner.

On utilise la fonction moyenne m = 0, de telle sorte qu'on obtient toutes les caractéristiques de la fonction latente à capturer par le noyau.

Une fois que les hyper-paramètres du noyau de chaque groupement ont été déterminés, l'étape suivante est de réaliser la régression. Pour cela, on peut sélectionner N paires de mesures $(x_{i-h}, y_i)$ de chaque groupement en tant que données d'entraînement. La sélection de N paires de mesures permet d'accélérer la construction du modèle d'éolienne par rapport à un mode de réalisation pour lequel on considère l'ensemble des mesures. On note que, normalement, pour chaque point considéré en temps réel $x_*$, on pourrait trouver une estimation définie par : $\hat{y}_* = k(x_*, X)K_y y$ avec X est la matrice constuite à partir des N données d'entraînement et $K_y = k(X, X) + \sigma^2 * I$ avec k(X,X) est une matrice de telle sorte que sa valeur à la position (i, j) est $k(x_i, x_j)$, où $x_i$ et $x_j$ sont les lignes i et j de X, $\sigma^2$ est la variance du bruit et I est la matrice identité.

Cependant, dans une application réelle, l'algorithme estime $\hat{y}_*$ en temps réel, et le temps de calcul de $k(x_*, X)$ est dimensionné par la taille N des données d'entraînement. En effet, plus N est grand, plus long est le temps de calcul. De plus, un grand nombre de données d'entraînement permet de former un modèle d'éolienne précis qui relie les données mesurées à la vitesse du vent.

Pour résoudre ce problème, on peut mettre en oeuvre la méthode proposée dans le document : « J. Mayer, A. Basarur, M. Petrova, F. Sordon, A. Zea, and U. D. Hanebeck, "Position and Speed Estimation of PMSMs Using Gaussian Processes," in 21st IFAC World Congress, 2020. » qui consiste en l'utilisation de l'approximation suivante :

$$\hat{y}_* \approx k(x_*, \bar{X})\bar{\alpha}.$$

Avec $\overline{\alpha}$ étant déterminé en tant que solution d'un problème des moins carrés régularisé :

$$\bar{\alpha} = \arg \min_{\alpha \in \mathbb{R}^M} \|y - \bar{K}_y \alpha\|_2^2 + \mu \|\alpha\|_2^2$$

$$= (\bar{K}_y^T \bar{K}_y + \mu I)^{-1} \bar{K}_y^T y,$$

$\overline{X}$ est obtenu en supprimant un nombre de lignes de X, $\overline{K_y}$ est obtenue par suppression des lignes correspondantes de Ky, $\mu > 0$ est un coefficient de régularisation, M est le nombre de lignes de la matrice $\overline{X}$. On peut noter que $\overline{\alpha}$ dépend seulement des données d'entraînement,

par conséquent, on peut stocker cette valeur, et ensuite calculer $k(x_*, \overline{X})$ pour chaque nouveau point en temps réel. La suppression des lignes de X et Ky permet de limiter le nombre de calculs, tout en conservant une bonne représentativité, notamment grâce aux groupements déterminés.

Ainsi, la régression mise en oeuvre permet de déterminer les paramètres $\overline{\alpha}$ et $\overline{X}$ pour chaque groupement, ces paramètres sont ensuite utilisés par le modèle d'éolienne en temps réel.

d/ Construction du modèle d'éolienne

Lors de cette sous-étape, on construit le modèle d'éolienne au moyen des régressions déterminées pour chaque groupement.

Ainsi, l'ensemble des régressions pour chaque groupement permet de déterminer un modèle d'éolienne.

2/ Mesures

Lors de cette étape, on mesure, en temps réel :

- La vitesse de rotation du rotor,
- L'angle d'inclinaison des pales, et
- La puissance générée par la machine de conversion (en d'autres termes la puissance générée par l'éolienne).

Ces mesures peuvent préférablement être mises en oeuvre de la même manière que les mesures simultanées de la sous-étape 1/a.

Lors de cette étape, on peut également mémoriser les mesures, notamment pour la mise en oeuvre dans laquelle on utilise les mesures antérieures.

Selon un mode de réalisation de l'invention, au moins une des mesures peut être obtenue à partir d'un système de contrôle et d'acquisition de données en temps réel (SCADA). Un système de contrôle et d'acquisition de données en temps réel (SCADA) (de l'anglais : « Supervisory Control And Data Acquisition ») est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). De préférence, toutes les mesures peuvent être obtenues à partir du système SCADA, ce qui facilite la mise en oeuvre du procédé sans instrumentation particulière. En outre, le système SCADA peut permettre de prendre en compte au moins une autre mesure pour rendre la détermination de la vitesse du vent dans le plan du rotor plus précise. Il peut s'agir notamment de températures, de données électriques, de vibrations, etc. Les températures peuvent informer sur les pertes mécaniques effectives, et permettent ainsi d'affiner la modélisation de l'éolienne. L'accélérométrie, associée à une compréhension modale et vibratoire suffisamment fine et fidèle de la structure, peut permettre de remonter à une estimation de l'état du vent et des turbulences impactant l'éolienne.

Alternativement, au moins une des mesures peut être obtenue par un capteur dédié. Pour cette réalisation :

- pour la mesure de la vitesse de rotation du rotor, on peut utiliser un capteur de rotation angulaire du rotor, et/ou
- pour la mesure de l'angle d'inclinaison des pales, on peut utiliser un capteur angulaire des pales, et/ou
- pour la mesure de la puissance générée par la machine de conversion, on peut utiliser un capteur de tension connue et contrôlée, et un capteur d'intensité pour la mesure du courant débité par la génératrice.

3/ Détermination de la vitesse du vent

Lors de cette étape, on détermine, en temps réel, la vitesse du vent dans le plan du rotor, au moyen des mesures effectuées à l'étape 2 et du modèle construit à l'étape 1. Ainsi, on obtient une détermination de la vitesse de vent de manière précise.

Selon un mode de réalisation de l'invention, on peut déterminer la vitesse du vent actuelle.

En variante, on peut prédire la vitesse du vent pour au moins un pas de temps futur. Par exemple, on peut prédire la vitesse du vent pour un pas de temps futur ou pour deux pas de temps futurs.

Avantageusement, on peut associer les mesures de l'étape 2 à au moins un groupement déterminé à la sous-étape 1/b, et on applique la régression qui a été déterminée pour ce groupement aux mesures. Ainsi, on applique une régression qui correspond aux mêmes conditions de fonctionnement de l'éolienne.

Conformément à une mise en oeuvre de l'invention, on peut déterminer, en temps réel, la vitesse du vent dans le plan du rotor de l'éolienne en déterminant la distance euclidienne entre les mesures en temps réel de l'étape 2 et les centres des groupements du modèle construits lors de la sous-étape 1/b. Puis, on peut appliquer le modèle d'éolienne au moyen d'une combinaison pondérée des régressions de chaque groupement. La pondération mise en oeuvre dans cette combinaison pondérée peut être dépendante de la distance euclidienne déterminée. Ainsi, on associe les mesures de l'étape 2 à au moins un groupement, qui correspond aux mêmes conditions de fonctionnement de l'éolienne, la détermination de la distance euclidienne permettant de déterminer le ou les groupements les plus proches, donc ceux qui ont les mêmes conditions de fonctionnement de l'éolienne.

On peut réaliser cette mise en oeuvre de l'invention au moyen des étapes suivantes :
On note C le nombre de groupements du modèle d'éolienne. On note, $\hat{y}_{1,*}$ ..., $\hat{y}_{C,*}$ les valeurs déterminées de la vitesse du vent pour chaque groupement (de 1 à C). De plus, on note $c_i$ le centre du groupement i, ce centre est défini à partir des mesures associées lors de la sous étape 1/b.

On peut combiner ces valeurs déterminées au moyen d'une combinaison pondérée définie par :

$$\hat{y}_{\text{final},*} = \frac{\sum_{i=1}^{C} w_i \hat{y}_{i,*}}{\sum_{i=1}^{C} w_i}$$

Avec $\hat{y}_{\text{final},*}$ la vitesse de vent déterminée, et $w_i$ la pondération du groupement i, cette pondération traduit la pertinence de chaque estimation par rapport aux autres.

On peut calculer la pondération en tant que fonction de la distance euclidienne entre les mesures considérées $x_*$ (pour lesquelles on détermine la vitesse du vent) et le groupement considéré. Ainsi, la pondération peut s'écrire :

$$w_i = \frac{1}{\|x_* - c_i\|_2^n}$$

N est un paramètre libre à prédéterminé, avec n>0, plus la valeur de n est grand, moins on considère les contributions des groupements éloignés des mesures considérées.

Le cas extrême correspond au cas pour lequel $w_i$ = 1 pour le groupement dont le centre est le plus proche des mesures considérées $x_*$, et 0 pour les autres, en d'autres termes :

$$w_i = \begin{cases} 1, & i = \arg\min_{i \in \{1,\ldots,C\}} \|x_* - c_i\|_2, \\ 0, & \text{otherwise.} \end{cases}$$

La présente invention concerne également un procédé de contrôle d'au moins une éolienne. Pour ce procédé, on peut mettre en oeuvre les étapes suivantes :

- on détermine la vitesse du vent dans le plan du rotor de l'éolienne au moyen du procédé de détermination de la vitesse du vent selon l'une quelconque des variantes ou des combinaisons de variantes décrites ci-dessus ; et

- on contrôle l'éolienne en fonction de la vitesse du vent dans le plan du rotor de l'éolienne.

La prédiction précise et en temps réel de la vitesse du vent dans le plan du rotor de l'éolienne permet un contrôle adapté de l'éolienne, en termes de minimisation des effets sur la structure de l'éolienne et de maximisation de la puissance récupérée. En effet, au moyen de ce contrôle, on peut adapter les équipements de l'éolienne pour que l'éolienne soit dans la configuration optimale pour ce vent.

Conformément à une mise en oeuvre de l'invention, on peut commander l'angle d'inclinaison des pales et/ou le couple électrique de récupération du générateur de l'éolienne et/ou l'orientation de la nacelle en fonction de la vitesse du vent et de la direction du vent. De préférence, on peut commander l'angle d'inclinaison individuel des pales. D'autres types de dispositif de régulation peuvent être utilisés. Le contrôle d'inclinaison des pales permet d'optimiser la récupération d'énergie en fonction du vent incident sur les pales et de minimiser la fatigue de la structure.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La présente invention concerne également un procédé de surveillance et/ou diagnostic d'au moins une éolienne. Pour ce procédé, on peut mettre en oeuvre les étapes suivantes :

- on détermine la vitesse du vent dans le plan du rotor de l'éolienne au moyen du procédé de détermination de la vitesse du vent selon l'une quelconque des variantes ou des combinaisons de variantes décrites ci-dessus ; et

- on surveille et/ou on diagnostique le fonctionnement de l'éolienne en fonction de la vitesse du vent dans le plan du rotor.

La surveillance et/ou le diagnostic peut par exemple correspondre à la sollicitation mécanique subie par la structure de l'éolienne en fonction de la vitesse du vent dans le plan du rotor de l'éolienne.

De plus, l'invention concerne un produit programme d'ordinateur, qui comprend des instructions de code agencés pour mettre en oeuvre les étapes d'un des procédés précédemment décrits (procédé de détermination de la direction du vent, procédé de contrôle, procédé de diagnostic). Le programme est exécuté sur une unité de contrôle et/ou de diagnostic de l'éolienne.

L'invention concerne également une éolienne, notamment une éolienne offshore (en mer) ou onshore (sur terre). L'éolienne est équipée de moyens de mesure de la rotation du rotor, de moyens de mesure de l'angle d'inclinaison des pales, et de moyens de mesure de la puissance générée par la machine de conversion. En outre, l'éolienne comporte des moyens de détermination de la vitesse du vent dans le plan du rotor aptes à mettre en oeuvre le procédé de détermination du vent selon l'une des variantes ou des combinaisons de variantes décrites ci-dessus. Selon un mode de réalisation, l'éolienne peut être conforme à l'éolienne illustrée en figure 1.

Selon un mode de réalisation de l'invention, l'éolienne peut comporter un système de contrôle et d'acquisition de données en temps réel (SCADA) qui dispose d'au moins un moyen de mesure parmi les moyens de mesure de la rotation du rotor, les moyens de mesure de l'angle d'inclinaison des pales, et les moyens de mesure de la puissance générée par la machine de conversion. De préférence, le système SCADA peut disposer de toutes ces mesures. En outre, le système SCADA peut comporter des moyens de mesure supplémentaires (par exemple températures, mesures électriques, ...) qui peuvent permettre de rendre la détermination de la vitesse du vent dans le plan du rotor plus précise.

Alternativement, l'éolienne peut comporter au moins un capteur pour réaliser au moins une de ces mesures. Il peut donc s'agir :

- pour la mesure de la vitesse de rotation du rotor, d'un capteur de rotation angulaire du rotor, et/ou
- pour la mesure de l'angle d'inclinaison des pales, d'un capteur angulaire des pales, et/ou
- pour la mesure de la puissance générée par la machine de conversion, d'un capteur de tension connue et contrôlée, et un capteur d'intensité pour la mesure du courant débité par la génératrice.

Pour le mode de réalisation du procédé de contrôle, l'éolienne peut comprendre des moyens de contrôle, par exemple le contrôle de l'angle d'inclinaison (pouvant être traduit par angle de tangage) d'au moins une pale de l'éolienne ou le contrôle du couple électrique, pour mettre en oeuvre le procédé de contrôle selon l'invention.

Comme il va de soi, l'invention ne se limite pas aux seules formes de réalisation des procédés décrits ci-dessus à titre d'exemple, elle embrasse au contraire toutes les variantes de réalisation.

**Exemple**

Les caractéristiques et avantages du procédé selon l'invention apparaîtront plus clairement à la lecture de l'exemple d'application ci-après.

Pour cet exemple, on réalise la construction du modèle de l'éolienne au moyen de vitesse effective de vent dans le plan du rotor mesurée au moyen d'un capteur LiDAR, ces mesures LiDAR étant réalisées simultanément à des mesures SCADA de la vitesse de rotation du rotor, de l'angle d'inclinaison des pales et de la puissance générée.

A partir de ces mesures, on forme un jeu de données d'entraînement appelé $S_{train}$, qu'on classifie en 5 groupements par l'algorithme du k-means++, et on en détermine leur centre. Puis, pour chaque groupement, on choisit aléatoirement N points pour construire la matrice X, et on choisit M points parmi les N points pour former la matrice $\overline{X}$ de manière à mettre en oeuvre l'étape de régression du procédé selon l'invention. Ensuite, parmi les mesures SCADA, on forme un jeu de données test appelé $S_{test}$, et on estime la vitesse du vent pour ce jeu de données au moyen du modèle d'éolienne.

Pour cet exemple, la durée d'échantillonnage des mesures SCADA est d'une seconde, et la durée d'échantillonnage des données du capteur LiDAR est de 0,25 seconde. Pour cet exemple, on choisit, r=20, N=50000 et M=3000.

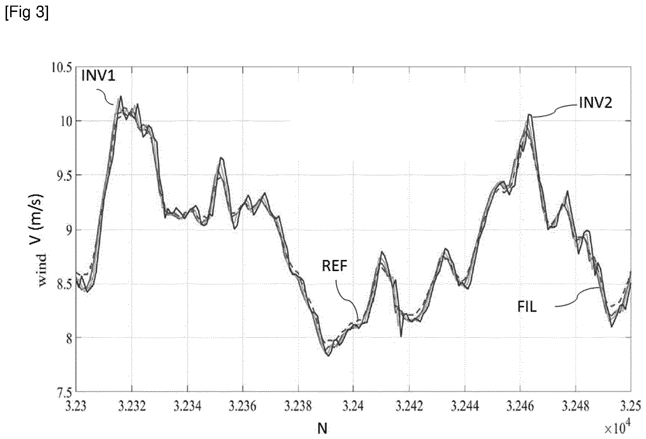

La figure 3 illustre la vitesse de vent effective v en m/s en fonction du numéro du points No (qui est une fonction du temps). Sur cette figure, on trace :

- la courbe de référence REF, obtenue à partir des mesures LiDAR,
- la courbe FIL de la vitesse du vent obtenue avec le procédé selon un premier mode de réalisation de l'invention pour lequel h=0, c'est-à-dire une détermination de la vitesse effective du vent actuel,
- la courbe INV1 de la vitesse du vent obtenue avec le procédé selon un deuxième mode de réalisation de l'invention pour lequel h=1, c'est-à-dire une prédiction de la vitesse effective du vent pour un pas de temps futur, et
- la courbe INV2 de la vitesse du vent obtenue avec procédé selon un troisième mode de réalisation de l'invention pour lequel h=2, c'est-à-dire une prédiction de la vitesse effective du vent pour deux pas de temps futurs.

On remarque que les quatre courbes sont quasiment superposées, ce qui implique que les trois modes de réalisation de l'invention permettent une détermination précise de la vitesse du vent dans le plan du rotor, aussi bien pour le temps actuel que pour un ou deux pas de temps futurs.

**Revendications**

1. Procédé de détermination d'une vitesse du vent dans le plan d'un rotor (PR) d'une éolienne (1), **caractérisé en ce qu'**on met en oeuvre les étapes suivantes :

   a. On construit (CON) un modèle d'éolienne (MOD) qui relie la vitesse de rotation dudit rotor de ladite éolienne (1), l'angle de l'inclinaison des pales de ladite éolienne (1), et la puissance générée par une machine de conversion de l'éolienne (1) à la vitesse du vent dans le plan du rotor de ladite éolienne au moyen des étapes suivantes :

      i. On mesure simultanément (LID, MES1) la vitesse du vent dans le plan du rotor de ladite éolienne ainsi que la vitesse de rotation dudit rotor, l'angle d'inclinaison des pales et la puissance générée par ladite machine de conversion de ladite éolienne ;
      ii. On classe (GRO) lesdites mesures simultanées de la vitesse du vent dans le plan du rotor de ladite éolienne ainsi que de la vitesse de rotation dudit rotor, de l'angle d'inclinaison des pales et de la puissance générée par ladite machine de conversion de ladite éolienne en au moins deux classes de conditions de fonctionnement de l'éolienne ;
      iii. Pour chaque classe, on détermine une régression (REG) entre les mesures de la vitesse du vent dans le plan du rotor de ladite éolienne ainsi que la vitesse de rotation dudit rotor, l'angle d'inclinaison des pales et la puissance générée par ladite machine de conversion de ladite éolienne par une méthode de décomposition en fonctions de base, et par une méthode permettant d'établir une relation entre ces fonctions de base et la vitesse du vent dans le plan du rotor, de préférence au moyen d'une méthode de régression par processus gaussien et par une méthode de régression par les moindres carrés ;
      iv. On construit ledit modèle de ladite éolienne (MOD) au moyen desdites régressions déterminées pour chaque classe ;

   b. On mesure (MES2), en temps réel (tpr), la vitesse de rotation dudit rotor, l'angle d'inclinaison des pales et la puissance générée par ladite machine de conversion de ladite éolienne ; et
   c. On détermine, en temps réel (tpr), la vitesse du vent v dans le plan dudit rotor de ladite éolienne (1) au moyen desdites mesures en temps réel (MES2) de la vitesse de rotation dudit rotor, de l'angle d'inclinaison des pales et de la puissance générée par ladite machine de conversion de ladite éolienne et dudit modèle d'éolienne.

2. Procédé de détermination de la vitesse du vent selon la revendication 1, dans lequel on classe (GRO) lesdites mesures de la vitesse du vent, de la vitesse de rotation dudit rotor, de l'angle d'inclinaison des pales et de la puissance générée par ladite machine de conversion de ladite éolienne en au moins deux classes de conditions de fonctionnement de l'éolienne au moyen d'une méthode de classification, notamment au moyen d'un algorithme du k-means, de préférence au moyen d'un algorithme du k-means ++.

3. Procédé de détermination de la vitesse du vent selon l'une des revendications précédentes, dans lequel le nombre de classes est compris entre 3 et 10, de préférence entre 4 et 7.

4. Procédé de détermination de la vitesse du vent selon l'une des revendications précédentes, dans lequel on mesure la vitesse du vent (LID) dans le plan du rotor sur la base de mesures d'un capteur LiDAR.

5. Procédé de détermination de la vitesse du vent selon l'une des revendications précédentes, dans lequel on détermine, en temps réel, la vitesse de vent (v) dans le plan dudit rotor de ladite éolienne en déterminant la distance euclidienne entre lesdites mesures en temps réel de la vitesse de rotation dudit rotor, de l'angle d'inclinaison des pales et de la puissance générée par ladite machine de conversion de ladite éolienne et le centre de chaque classe, et on applique ledit modèle de l'éolienne (MOD) par une combinaison pondérée desdites régressions de chaque classe, la pondération étant dépendante de ladite distance euclidienne.

6. Procédé de détermination de la vitesse du vent selon l'une des revendications précédentes, dans lequel on prédit la vitesse du vent (v) dans le plan dudit rotor de ladite éolienne (1) pour au moins un pas de temps futur, à partir dudit modèle d'éolienne (MOD) et desdites mesures en temps réel de la vitesse de rotation dudit rotor (MES2), de l'angle d'inclinaison des pales et de la puissance générée par ladite machine de conversion de ladite éolienne.

7. Procédé de contrôle d'une éolienne (1), **caractérisé en ce qu'**on met en oeuvre les étapes suivantes :

   a. on détermine ladite vitesse du vent dans ledit plan de rotor (PR) de l'éolienne (1) au moyen du procédé selon l'une des revendications précédentes ;
   b. on contrôle ladite éolienne (1) en fonction de ladite vitesse du vent dans ledit plan du rotor de ladite éolienne (1).

8. Eolienne (1) **caractérisée en ce qu'**elle comporte des moyens de mesure de la vitesse de rotation dudit rotor, des moyens de mesure de l'angle d'inclinaison des pales de l'éolienne, des moyens de mesure de la puissance générée par la machine de conversion de ladite éolienne, et des moyens de détermination de la vitesse du vent dans le plan du rotor de l'éolienne aptes à mettre en oeuvre le procédé selon l'une des revendications 1 à 7.

9. Eolienne selon la revendication 9, comportant un système de contrôle et d'acquisition de données en temps réel qui comprend lesdits moyens de mesure de la vitesse de rotation dudit rotor, lesdits moyens de mesure de l'angle d'inclinaison des pales de l'éolienne, et lesdits moyens de mesure de la puissance générée par la machine de conversion de ladite éolienne.

10. Produit programme d'ordinateur **caractérisé en ce qu'**il comprend des instructions de code qui conduisent l'éolienne selon la revendication 8 ou 9 à mettre en oeuvre les étapes d'un procédé selon l'une des revendications 1-7, lorsque le programme est exécuté sur une unité de contrôle et/ou de diagnostic de ladite éolienne (1).

**Patentansprüche**

1. Verfahren zur Bestimmung einer Windgeschwindigkeit in der Ebene eines Rotors (PR) einer Windkraftanlage (1), **dadurch gekennzeichnet, dass** man die folgenden Schritte umsetzt:

   a. Man erstellt (CON) ein Windkraftanlagenmodell (MOD), das die Drehzahl des Rotors der Windkraftanlage (1), den Neigungswinkel der Rotorblätter der Windkraftanlage (1) und die von einer Umwandlungsmaschine der Windkraftanlage (1) erzeugte Leistung mit der Windgeschwindigkeit in der Ebene des Rotors der Windkraftanlage verknüpft, mittels der folgenden Schritte:

      i. man misst gleichzeitig (LID, MES1) die Windgeschwindigkeit in der Ebene des Rotors der Windkraftanlage sowie die Drehzahl des Rotors, den Neigungswinkel der Rotorblätter und die von der Umwandlungsmaschine der Windkraftanlage erzeugte Leistung;
      ii. man klassifiziert (GRO) die gleichzeitigen Messungen der Windgeschwindigkeit in der Ebene des Rotors der Windkraftanlage sowie der Drehzahl des Rotors, des Neigungswinkels der Rotorblätter und der von der Umwandlungsmaschine der Windkraftanlage erzeugten Leistung in mindestens zwei Betriebsbedingungsklassen der Windkraftanlage;
      iii. man bestimmt, für jede Klasse, eine Regression (REG) zwischen den Messungen der Windgeschwindigkeit in der Ebene des Rotors der Windkraftanlage sowie der Drehzahl des Rotors, des Neigungswinkels der Rotorblätter und der von der Umwandlungsmaschine der Windkraftanlage erzeugten Leistung mit einer Methode zur Zerlegung in Grundfunktionen und mit einer Methode, die es ermöglicht, eine Beziehung zwischen diesen Grundfunktionen und der Windgeschwindigkeit in der Ebene des Rotors zu ermitteln, bevorzugt mit einer Gauß-Prozess-Regressionsmethode und mit einer Regressionsmethode der kleinsten Quadrate;
      iv. man erstellt das Modell der Windkraftanlage (MOD) mittels der für jede Klasse bestimmten Regressionen;

   b. man misst (MES2), in Echtzeit (tpr), die Drehzahl des Rotors, den Neigungswinkel der Rotorblätter und die von der Umwandlungsmaschine der Windkraftanlage erzeugte Leistung; und
   c. man bestimmt, in Echtzeit (tpr), die Windgeschwindigkeit v in der Ebene des Rotors der Windkraftanlage (1) mittels der Echtzeitmessungen (MES2) der Drehzahl des Rotors, des Neigungswinkels der Rotorblätter und der von der Umwandlungsmaschine der Windkraftanlage erzeugten Leistung und des Windkraftanlagenmodells.

2. Verfahren zur Bestimmung der Windgeschwindigkeit nach Anspruch 1, bei dem man die Messungen der Windgeschwindigkeit, der Drehzahl des Rotors, des Neigungswinkels der Rotorblätter und der von der Umwandlungsmaschine der Windkraftanlage erzeugten Leistung in mindestens zwei Betriebsbedingungsklassen der Windkraftanlage mittels einer Klassifizierungsmethode klassifiziert (GRO), insbesondere mittels eines k-Means-Algorithmus, bevorzugt mittels eines k-Means++-Algorithmus.

3. Verfahren zur Bestimmung der Windgeschwindigkeit nach einem der vorhergehenden Ansprüche, bei dem die Anzahl der Klassen zwischen 3 und 10, bevorzugt zwischen 4 und 7 beträgt.

4. Verfahren zur Bestimmung der Windgeschwindigkeit nach einem der vorhergehenden Ansprüche, bei dem man die Windgeschwindigkeit in der Ebene des Rotors auf der Grundlage von Messungen eines LiDAR-Sensors misst (LID).

5. Verfahren zur Bestimmung der Windgeschwindigkeit nach einem der vorhergehenden Ansprüche, bei dem man, in Echtzeit, die Windgeschwindigkeit (v) in der Ebene des Rotors der Windkraftanlage bestimmt, indem man den euklidischen Abstand zwischen den Echtzeitmessungen der Drehzahl des Rotors, des Neigungswinkels der Rotorblätter und der von der Umwandlungsmaschine der Windkraftanlage erzeugten Leistung und dem Mittelpunkt jeder Klasse bestimmt und das Windkraftanlagenmodell (MOD) durch eine gewichtete Kombination der Regressionen jeder Klasse anwendet, wobei die Gewichtung von dem euklidischen Abstand abhängig ist.

6. Verfahren zur Bestimmung der Windgeschwindigkeit nach einem der vorhergehenden Ansprüche, bei dem man die Windgeschwindigkeit (v) in der Ebene des Rotors der Windkraftanlage (1) für mindestens einen zukünftigen Zeitschritt ausgehend von dem Windkraftanlagenmodell (MOD) und den Echtzeitmessungen der Drehzahl des Rotors (MES2), des Neigungswinkels der Rotorblätter und der von der Umwandlungsmaschine der Windkraftanlage erzeugten Leistung vorhersagt.

7. Verfahren zur Steuerung einer Windkraftanlage (1), **dadurch gekennzeichnet, dass** man die folgenden Schritte umsetzt:

a. man bestimmt die Windgeschwindigkeit in der Rotorebene (PR) der Windkraftanlage (1) mittels des Verfahrens nach einem der vorhergehenden Ansprüche;
b. man steuert die Windkraftanlage (1) in Abhängigkeit von der Windgeschwindigkeit in der Ebene des Rotors der Windkraftanlage (1).

8. Windkraftanlage (1), **dadurch gekennzeichnet, dass** sie Einrichtungen zum Messen der Drehzahl des Rotors, Einrichtungen zum Messen des Neigungswinkels der Rotorblätter der Windkraftanlage, Einrichtungen zum Messen der von der Umwandlungsmaschine der Windkraftanlage erzeugten Leistung und Einrichtungen zum Bestimmen der Windgeschwindigkeit in der Ebene des Rotors der Windkraftanlage beinhaltet, die geeignet sind, das Verfahren nach einem der Ansprüche 1 bis 7 umzusetzen.

9. Windkraftanlage nach Anspruch 8, umfassend ein System zur Steuerung und Echtzeitdatenerfassung, das die Einrichtungen zum Messen der Drehzahl des Rotors, die Einrichtungen zum Messen des Neigungswinkels der Rotorblätter der Windkraftanlage und die Einrichtungen zum Messen der von der Umwandlungsmaschine der Windkraftanlage erzeugten Leistung umfasst.

10. Computerprogrammprodukt, **dadurch gekennzeichnet, dass** es Codeanweisungen umfasst, die die Windkraftanlage nach Anspruch 8 oder 9 dazu bringen, die Schritte eines Verfahrens nach einem der Ansprüche 1 bis 7 umzusetzen, wenn das Programm auf einer Steuerungs- und/oder Diagnoseeinheit der Windkraftanlage (1) ausgeführt wird.

**Claims**

1. Method for determining a wind speed in the plane of a rotor (PR) of a wind turbine (1), **characterized in that** the following steps are implemented:

a. constructing (CON) a wind turbine model (MOD) that links the rotational speed of said rotor of said wind turbine (1), the tilt angle of the blades of said wind turbine (1), and the power generated by a conversion machine of the wind turbine (1) to the wind speed in the plane of the rotor of said wind turbine, by way of the following steps:

i. simultaneously measuring (LID, MES1) the wind speed in the plane of the rotor of said wind turbine along with the rotational speed of said rotor, the tilt angle of the blades and the power generated by said conversion machine of said wind turbine;

ii. classifying (GRO) said simultaneous measurements of the wind speed in the plane of the rotor of said wind turbine along with the rotational speed of said rotor, the tilt angle of the blades and the power generated by said conversion machine of said wind turbine into at least two classes of operating conditions of the wind turbine;

iii. for each class, determining a regression (REG) between the measurements of the wind speed in the plane of the rotor of said wind turbine along with the rotational speed of said rotor, the tilt angle of the blades and the power generated by said conversion machine of said wind turbine using a basic function decomposition method, and using a method for establishing a relationship between these basic functions and the wind speed in the plane of the rotor, preferably by way of a Gaussian process regression method and using a least squares regression method;

iv. constructing said wind turbine model (MOD) by way of said regressions determined for each class;

b. measuring (MES2), in real time (tpr), the rotational speed of said rotor, the tilt angle of the blades and the power generated by said conversion machine of said wind turbine; and

c. determining, in real time (tpr), the wind speed v in the plane of said rotor of said wind turbine (1) by way of said real-time measurements (MES2) of the rotational speed of said rotor, of the tilt angle of the blades and of the power generated by said conversion machine of said wind turbine, and said wind turbine model.

2. Method for determining wind speed according to Claim 1, wherein said measurements of the wind speed, of the rotational speed of said rotor, of the tilt angle of the blades and of the power generated by said conversion machine of said wind turbine are classified (GRO) into at least two classes of operating conditions of the wind turbine by way of a classification method, in particular by way of a k-means algorithm, preferably by way of a k-means++ algorithm.

3. Method for determining wind speed according to either of the preceding claims, wherein the number of classes is between 3 and 10, preferably between 4 and 7.

4. Method for determining wind speed according to one of the preceding claims, wherein the wind speed (LID) in the plane of the rotor is measured on the basis of measurements from a lidar sensor.

5. Method for determining wind speed according to one of the preceding claims, wherein the wind speed (v) in the plane of said rotor of said wind turbine is determined in real time by determining the Euclidean distance between said real-time measurements of the rotational speed of said rotor, of the tilt angle of the blades and of the power generated by said conversion machine of said wind turbine and the centre of each class, and said model of the wind turbine (MOD) is applied by a weighted combination of said regressions of each class, the weighting being dependent on said Euclidean distance.

6. Method for determining wind speed according to one of the preceding claims, wherein the wind speed (v) in the plane of said rotor of said wind turbine (1) is predicted for at least one future time increment, based on said wind turbine model (MOD) and said real-time measurements of the rotational speed of said rotor (MES2), of the tilt angle of the blades and of the power generated by said conversion machine of said wind turbine.

7. Method for controlling a wind turbine (1), **characterized in that** the following steps are implemented:

a. determining said wind speed in said rotor plane (PR) of the wind turbine (1) by way of the method according to one of the preceding claims;

b. controlling said wind turbine (1) on the basis of said wind speed in said plane of the rotor of said wind turbine (1).

8. Wind turbine (1), **characterized in that** it comprises means for measuring the rotational speed of said rotor, means for measuring the tilt angle of the blades of the wind turbine, means for measuring the power generated by the conversion machine of said wind turbine, and means for determining the wind speed in the plane of the rotor of the wind turbine, said means being able to implement the method according to one of Claims 1 to 7.

9. Wind turbine according to Claim 8, comprising a real-time data acquisition and control system that comprises said means for measuring the rotational speed of said rotor, said means for measuring the tilt angle of the blades of the wind turbine, and said means for measuring the power generated by the conversion machine of said wind turbine.

10. Computer program product, **characterized in that** it comprises code instructions that prompt the wind turbine according to Claim 8 or 9 to implement the steps of a method according to one of Claims 1-7 when the program is executed on a control and/or diagnostic unit of said wind turbine (1).

[Fig 1]

[Fig 2]

[Fig 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- WO 2017211367 A
- US 2012078518 A
- US 2015097373 A
- FR 2996266
- FR 3068139
- US 20200124026 A
- FR 3088971
- US 20200166650 A
- FR 2976630 A1
- US 20120321463 A

**Littérature non-brevet citée dans la description**

- **D. ARTHUR ; S. VASSILVITSKII.** k-means++: The Advantages of Careful Seeding. *Stanford InfoLab, Technical Report 2006-13,* Juin 2006, http://il-pubs.stanford.edu:8090/778
- **J. MAYER ; A. BASARUR ; M. PETROVA ; F. SORDON ; A. ZEA ; U. D. HANEBECK.** Position and Speed Estimation of PMSMs Using Gaussian Processes. *21st IFAC World Congress,* 2020